# EUROPEAN PATENT APPLICATION

(11) **EP 4 830 546 A1**
(43) Date of publication of application: **28.10.2026**
(21) Application number: 25210462.5
(22) Date of filing: 22.10.2025
(51) Int. Cl.: A24F 40/40, A24F 40/51, A24F 40/60, A24F 40/10

(54) **ELECTRONIC ATOMIZATION DEVICE**

(30) Priority: 21.04.2025 CN 202520760679 U; 27.05.2025 CN 202521059617 U
(71) Applicant: Shenzhen Geekvape Technology Co., Ltd., Shenzhen, Guangdong 518101 (CN)
(72) Inventor: DUAN, Hongxing, Shenzhen (CN); GUO, Mantang, Shenzhen (CN); LIAO, Huaping, Shenzhen (CN)
(74) Representative: Metida

(57) **Abstract**

An electronic atomization device comprises a housing having a grip portion and a mouthpiece portion connected with the grip portion; an atomizing core disposed in the grip portion, the atomizing core defining an atomizing channel in communication with the mouthpiece portion; and a touch sensing element and a control module disposed in the housing. The control module is electrically connected to the touch sensing element and the atomizing core. The touch sensing element includes a first touch sensing portion and a second touch sensing portion of an integrated structure. The first touch sensing portion is disposed at the mouthpiece portion and configured to generate a first capacitance signal, and the second touch sensing portion is disposed at the grip portion and configured to generate a second capacitance signal. The control module is configured to control the atomizing core to activate or deactivate based on the first capacitance signal and the second capacitance signal.

## Description

### TECHNICAL FIELD

The present application relates to the field of aerosol-generation technology, and more particularly to an electronic atomization device.

### BACKGROUND

An electronic atomization device is an apparatus in which an atomization assembly heats aerosol substrate and the aerosol substrate is atomized to generate an aerosol for a user to inhale.

Existing electronic atomization devices typically include an airflow sensor to detect whether a user is inhaling. When a user's inhalation is detected, a detection signal is sent to a control module. The control module then controls an atomizing core to heat an aerosol substrate based on the detection signal, and the heated aerosol substrate is atomized and generate aerosol. However, the airflow sensor communicates with the atomizing air channel through a detection air channel, and it results in the possibility that the aerosol substrate or condensate flows toward the airflow sensor and causes false activation of the airflow sensor. Therefore, the existing inhalation detection method still needs improvement.

### SUMMARY

The primary objective of the present application is to provide an electronic atomization device to solve the problem of unintended activation in the prior art where electronic atomization devices utilize airflow sensors for inhalation detection.

In an embodiment, the present disclosure provides an electronic atomization device, comprising: a housing comprising a grip portion and a mouthpiece portion connected with the grip portion; an atomizing core disposed in the grip portion, the atomizing core defining an atomizing channel in communication with the mouthpiece portion; and a touch sensing element and a control module, wherein the control module is electrically and respectively connected to the touch sensing element and the atomizing core, and the touch sensing element and the control module are disposed in the housing; wherein the touch sensing element comprises a first touch sensing portion and a second touch sensing portion of an integrated structure, the first touch sensing portion is disposed at the mouthpiece portion and configured to generate a first capacitance signal, the second touch sensing portion is disposed at the grip portion and configured to generate a second capacitance signal, and the control module is configured to control the atomizing core to activate or deactivate based on the first capacitance signal and the second capacitance signal.

In one further example, the first touch sensing portion includes a first touch surface and a second touch surface, the first touch surface and the second touch surface are oppositely disposed in the mouthpiece portion, and the first touch sensing portion generates the first capacitance signal when a portion of the mouthpiece portion corresponding to the first touch surface and/or the second touch surface is touched.

In one further example, taking a direction from the mouthpiece portion toward the gripping portion as an orthographic projection direction L1, and defining a plane perpendicular to the orthographic projection direction L1 as a projection plane. A first direction L2 and a second direction L3 are located in this projection plane, and the first directionL2 is perpendicular to the second direction L3. In the projection plane, a first projected length of the mouthpiece portion along the second direction L2 is greater than a second projected length of the mouthpiece portion along the second direction.

In one further example, a length of the projection of the grip portion along the first direction is greater than that along the second direction; the second touch sensing portion includes a third touch surface and a fourth touch surface, the third touch surface and the fourth touch surface are disposed on two adjacent sides of the grip portion; the third touch surface and the first touch surface are located on the same side of the housing; wherein the second touch sensing portion generates the second capacitance signal when the portion of the grip portion corresponding to the third touch surface or the fourth touch surface is touched.

In one further example, the touch sensing element further includes a first connecting portion, and the first connecting portion is connected between the first touch surface and the third touch surface.

In one further example, the touch sensing element further includes a second connecting portion, the second connecting portion is connected between the third touch surface and the fourth touch surface.

In one further example, the touch sensing element further includes a third connecting portion, and the first connecting portion and the third connecting portion are connected to two opposite sides of the third touch surface.

In one further example, the touch sensing element further includes a fourth connecting portion, the fourth connecting portion is connected between the first touch surface and the second touch surface, and the fourth connecting portion and the fourth touch surface are located on the same side of the housing.

In one further example, the touch sensing element further includes a second connecting portion, the second connecting portion is connected between the third touch surface and the fourth touch surface; wherein a height of the second connecting portion along the orthographic projection direction of the mouthpiece portion toward the grip portion is smaller than a height of the third touch surface and smaller than a height of the fourth touch surface.

In one further example, the first touch surface and the second touch surface each have a plurality of touch points; and/or, the third touch surface and the fourth touch surface each have a plurality of touch points.

In one further example, the first touch sensing portion generates the first capacitance signal when any touch point on the first touch surface and any touch point on the second touch surface are touched.

In one further example, the second touch sensing portion generates the second capacitance signal when any touch point on the third touch surface or any touch point on the fourth touch surface is touched.

In one further example, the housing includes a first shell and a second shell, the first shell is disposed inside the second shell, a limiting groove is defined in the first shell or the second shell, and the touch sensing element is disposed in the limiting groove.

In one further example, the limiting groove is defined on an outer side of the first shell, and an opening of the limiting groove faces the second shell.

In one further example, the touch sensing element further includes a third connecting portion, the third connecting portion is connected to a side of the second touch sensing portion away from the first touch sensing portion, and is configured to be directly electrically connected to the control module.

In one further example, the touch sensing element is a flexible circuit board, the electronic atomization device further comprises a plane perpendicular to a central axis of the atomizing channel, and the plane has a first direction and a second direction perpendicular to the first direction; a length of a first projection of the mouthpiece portion onto the plane along the first direction is greater than a length of the first projection along the second direction; a length of a second projection of the gripping portion onto the plane along the first direction is greater than a length of the second projection along the second direction; the second touch sensing portion includes a third touch surface and a fourth touch surface, the third touch surface and the fourth touch surface are disposed on two adjacent sides of the grip portion; the third touch surface and the first touch surface are located on the same side of the housing; the touch sensing element further includes a second connecting portion, the second connecting portion is connected between the third touch surface and the fourth touch surface; along the central axis of the atomizing channel, a height of the second connecting portion is smaller than a height of the third touch surface and smaller than a height of the fourth touch surface.

In a preferred electronic atomization device of the present application, this arrangement is realized by disposing the first touch sensing portion of the touch sensing element at the mouthpiece portion of the housing and disposing the second touch sensing portion of the touch sensing element at the grip portion of the housing. When a user holds the grip portion, the second touch sensing portion generates a second capacitance signal. When the user holds the mouthpiece portion in his or her mouth, the first touch sensing portion generates a first capacitance signal. The control module controls the activation of the atomizing core based on the first capacitance signal and the second capacitance signal. When the first capacitance signal and/or the second capacitance signal disappears, the control module controls the atomizing core to stop.

In this way, the control module can determine the user's usage status of the electronic atomization device based on the signal changes of the first touch sensing portion and the second touch sensing portion, and thereby control the activation or deactivation of the atomizing core. This avoids the situation where, when using an airflow sensor to detect whether a user is inhaling, the airflow sensor is prone to false activation and damage due to being affected by condensate or aerosol substrate. Additionally, by configuring the first touch sensing portion and the second touch sensing portion as an integrated structure, the stability of the connection between the first touch sensing portion and the second touch sensing portion can be ensured, and the efficiency of assembling the touch sensing element can be improved.

### BRIEF DESCRIPTION OF THE DRAWINGS

The accompanying drawings described here are used to provide to further understanding of the present application and constitute a part of the same. The illustrative embodiments of the present application and their descriptions are used to explain the present application and do not constitute an improper limitation of the present application. In the drawings:
FIG. 1 is a schematic structural diagram of an electronic atomization device according to an embodiment of the present application.
FIG. 2 is a schematic view of the electronic atomization device in FIG.1 with a second shell omitted.
FIG. 3 is a schematic structural diagram of a touch sensing element according to an embodiment of the present application.
FIG. 4 is an overall schematic view of the electronic atomization device along the orthographic projection direction according to an embodiment of the present application.
FIG. 5 is a cross-section view along A-A1 in FIG. 4, showing an air adjusting element in a first position.
FIG. 6 is a cross-section view along A-A1 in FIG. 4, showing the air adjusting element in a second position and an air flow path L4.
FIG. 7 is a schematic view of the electronic atomization device in FIG.1 with a housing and the touch sensing element omitted.
FIG. 8 is a schematic structural diagram of the electronic atomization device from another perspective shown in FIG. 1.
FIG. 9 is a schematic structural diagram of the electronic atomization device according from further another perspective shown in FIG. 1.
FIG. 10 is a schematic view of the electronic atomization device in FIG.1 with the housing and a transparent member hidden.
FIG. 11 is a structural schematic view of the electronic atomization device according to one of the embodiments of the present application.
FIG. 12 is a top view of the electronic atomization device shown in FIG. 11.
FIG. 13 is a cross-section view along M-M shown in FIG. 12.
FIG. 14 is a partially enlarged view of area A in FIG. 13.
FIG. 15 is a structural schematic view of a mouthpiece portion in the electronic atomization device shown in FIG. 11.
FIG. 16 is a structural schematic view of the mouthpiece portion from another perspective shown in FIG. 15.

### LIST OF REFERENCE SIGNS

Electronic atomization device 100; Housing 10; Grip portion 11; Mouthpiece portion 12; First shell 13; Second shell 14; Limiting groove 15; Air inlet hole 16; Atomizing core 20; Atomizing channel 21; Atomizing tube 22; Liquid guiding cotton 23; Heating element 24; Touch sensing element 30; First touch sensing portion 31; First touch surface 311; Second touch surface 312; Second touch sensing portion 32; Third touch surface 321; Fourth touch surface 322; First connecting portion 33; Second connecting portion 34; Third connecting portion 35; Fourth connecting portion 36; Control module 40; First control circuit board 41; Second control circuit board 42; Control switch 43; Control button 44; Charging interface 45; Storage battery 46; Bracket 50; Air inlet channel 51; Liquid storage assembly 60; Third shell 61; First sealing member 62; Second sealing member 63; Liquid storage cotton 64; Liquid storage cavity 65; Mounting base 70; Air adjustment member 81; Third sealing member 82; Display module 91; Transparent member 92; Orthographic projection direction L1; First direction L2; Second direction L3; Air flow path L4; Atomizing assembly 110; Main body 101; Air exhaust channel 102; Air inlet end 1021; Air outlet end 1022; First air channel 1023; Second air channel 1024; Atomizer 103; Aerosol substrate 120; Liquid absorbing member 130; Avoidance hole 1301.

### DETAILED DESCRIPTION

It should be noted that, where there is no conflict, the embodiments of the present application and the features in the embodiments may be combined with each. The present application will be described in detail below with reference to the accompanying drawings and in conjunction with the embodiments.

It should also be noted that the terms used herein are only for the purpose of describing particular embodiments and is not intended to limit the exemplary embodiments according to the present application. As used herein, unless the context clearly indicates otherwise, the singular forms also include the plural forms. Furthermore, it should be understood that when the terms "comprise" and/or "include" are used in this specification, they indicate the presence of stated features, steps, operations, devices, components, and/or combinations thereof.

Unless specifically stated otherwise, the relative arrangements of components and steps, numerical expressions, and numerical values set forth in these embodiments do not limit the scope of the present application. Meanwhile, it should be understood that, for ease of description, the dimensions of various parts shown in the drawings are not drawn in accordance with actual proportional relationships. Technologies, methods, and devices known to ordinary skilled persons in the relevant art may not be discussed in detail, but where appropriate, the technologies, methods, and devices should be regarded as part of the authorized specification. In all examples shown and discussed herein, any specific value should be construed as merely exemplary, and not as a limitation. Therefore, other examples of the exemplary embodiments may have different values. It should be noted that similar reference numerals and letters denote similar items in the following drawings; therefore, once an item is defined in one drawing, no further discussion thereof is required in subsequent drawings.

### Embodiment 1

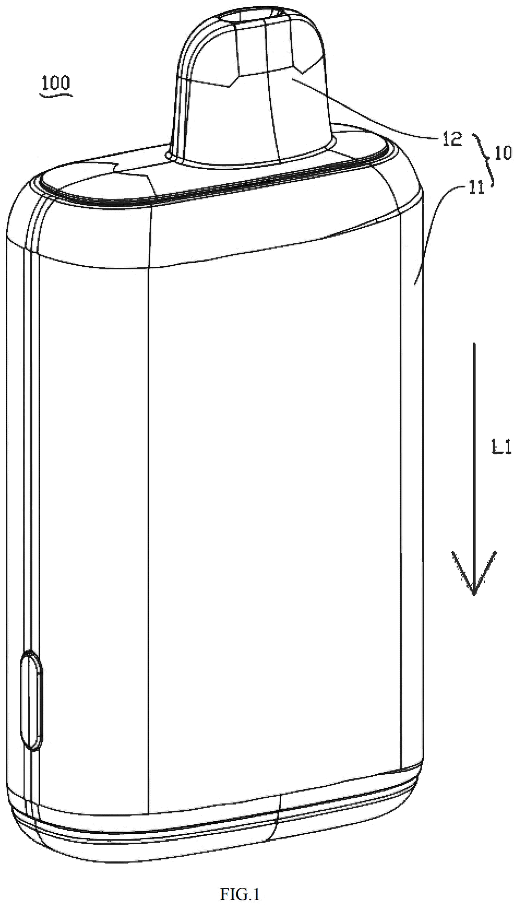

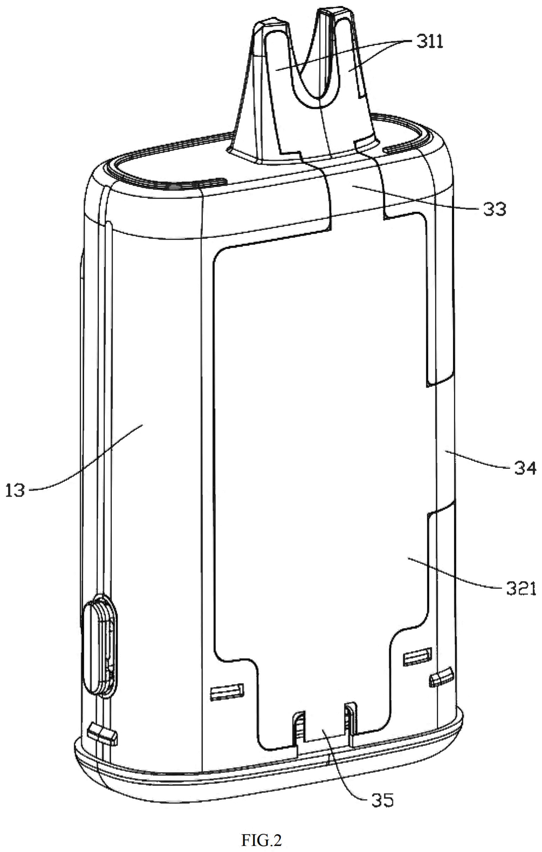

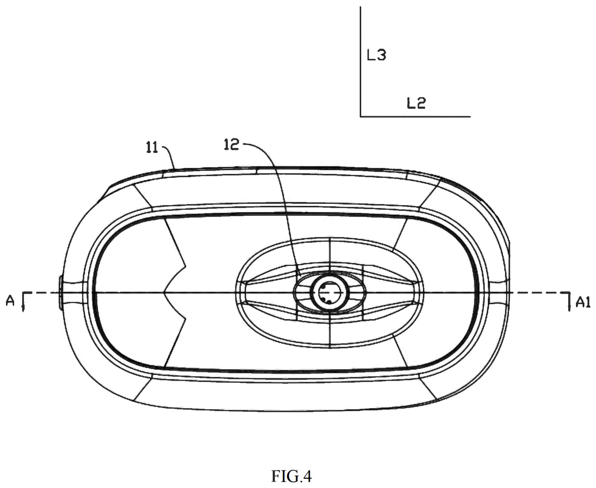

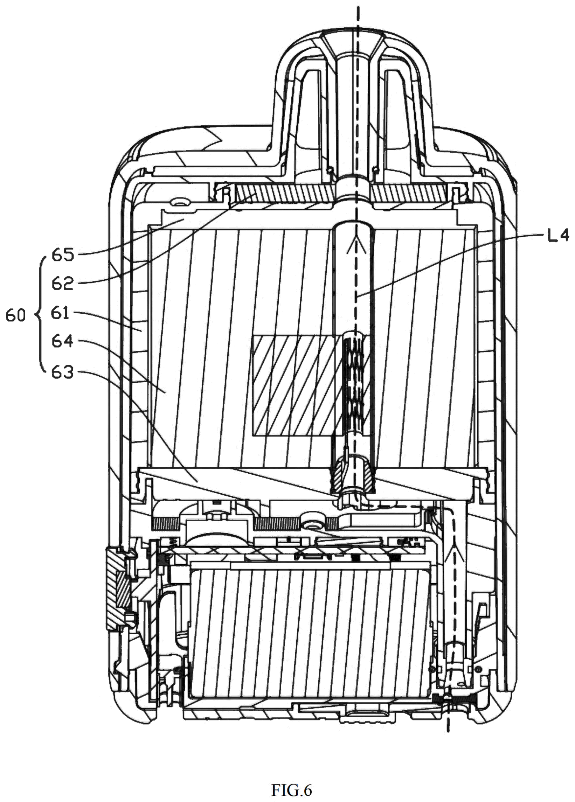

Please refer to FIGS. 1-6. The present application provides an electronic atomization device 100, which includes a housing 10, an atomizing core 20, a touch sensing element 30, and a control module 40. The housing 10 includes a grip portion 11 and a mouthpiece portion 12 connected with the grip portion 11; the atomizing core 20 is disposed in the grip portion 11, and the atomizing core 20 defines an atomizing channel 21 in communication with the mouthpiece portion 12; the control module 40 is electrically and respectively connected to the touch sensing element 30 and the atomizing core 20, and the touch sensing element 30 and the control module 40 are disposed in the housing 10.

The touch sensing element 30 includes a first touch sensing portion 31 and a second touch sensing portion 32 of an integrated structure. The first touch sensing portion 31 is disposed at the mouthpiece portion 12 and configured to generate a first capacitance signal, while the second touch sensing portion 32 is disposed at the grip portion 11 and configured to generate a second capacitance signal. When a user holds the grip portion 11, the second touch sensing portion 32 generates the second capacitance signal; when the user holds the mouthpiece portion 12 in the user's mouth, the first touch sensing portion 31 generates the first capacitance signal. The control module 40 controls the atomizing core 20 to start based on the first capacitance signal and the second capacitance signal, and controls the atomizing core 20 to stop when the first capacitance signal and/or the second capacitance signal disappears. In this way, the control module 40 can determine the user's usage state of the electronic atomization device 100 based on the capacitance change of the touch sensing element 30, and accordingly control the atomizing core 20 to start or stop. Further, this avoids the issues associated with using an airflow sensor to detect user inhalation-specifically, that the airflow sensor is prone to unintended activation and damage due to the influence of condensate or aerosol substrate.

In addition, by configuring the first touch sensing portion 31 and the second touch sensing portion 32 as an integrated structure, the stability of the connection between the first touch sensing portion 31 and the second touch sensing portion 32 can be ensured, and the efficiency of assembling the touch sensing element 30 can be improved.

Furthermore, as long as the first touch sensing portion 31 generates the first capacitance signal and the second touch sensing portion 32 generates the second capacitance signal, the control module 40 is able to control the atomizing core 20 to start. There is no requirement that the first touch sensing portion 31 and the second touch sensing portion 32 generate the capacitance signals in a specific sequence. Specifically, the valid scenarios include: the first touch sensing portion 31 generates the first capacitance signal first, followed by the second touch sensing portion 32 generating the second capacitance signal; the first touch sensing portion 31 generates the first capacitance signal simultaneously with the second touch sensing portion 32 generating the second capacitance signal; or the second touch sensing portion 32 generates the second capacitance signal first, followed by the first touch sensing portion 31 generating the first capacitance signal. In all the above scenarios, the control module 40 is able to control the atomizing core 20 to start. Therefore, there is no sequential cooperation relationship between the first capacitance signal and the second capacitance signal, which effectively improves the startup efficiency of the atomizing core 20.

When the first capacitance signal disappears, when the second capacitance signal disappears, or when both the first capacitance signal and the second capacitance signal disappear simultaneously, the control module 40 immediately controls the atomizing core 20 to stop operating. Therefore, the efficiency of stopping the atomizing core 20 can be effectively enhanced.

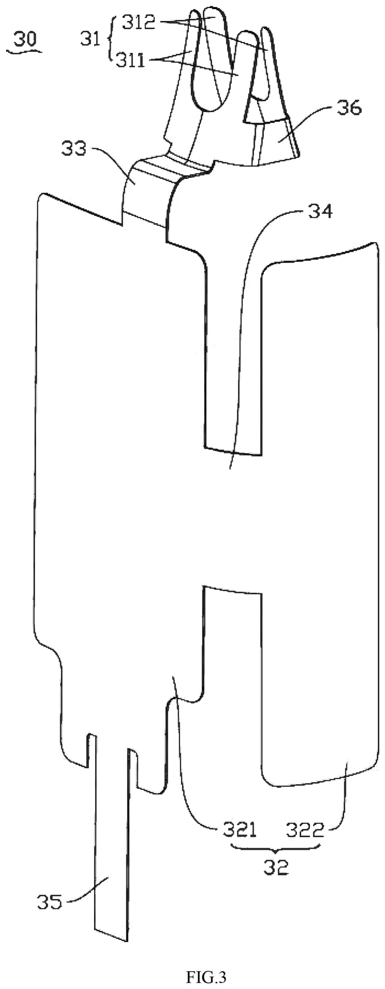

In some embodiments, referring to FIG.3 the first touch sensing portion 31 includes a first touch surface 311 and a second touch surface 312, the first touch surface 311 and the second touch surface 312 are oppositely disposed in the mouthpiece portion 12.

In some embodiments, the first touch sensing portion 31 generates the first capacitance signal when the portion of the mouthpiece portion 12 corresponding to the first touch surface 311 or the second touch surface 312 is touched. That is, the first touch sensing portion 31 generates the first capacitance signal whenever the portion of the mouthpiece portion 12 corresponding to the first touch surface 311 or the second touch surface 312 is touched.

In some embodiments, the first touch sensing portion 31 generates the first capacitance signal only when the portions of the mouthpiece portion 12 that correspond to both the first touch surface 311 and the second touch surface 312 are touched. This reduces false touches, thereby preventing unintended dry burning of the atomizing core 20.

In some embodiments, referring to FIG.1, 3 and 4, taking a direction from the mouthpiece portion 12 toward the gripping portion 11 as an orthographic projection direction L1, and defining a plane perpendicular to the orthographic projection direction L1 as the projection plane. The first direction L2 and the second direction L3 are both located in this projection plane, and the first directionL2 is perpendicular to the second direction L3. In this projection plane, a first projected length of the mouthpiece portion 12 along the second direction L2 is greater than a second projected length of the mouthpiece portion 12 along the second direction L3. Therefore, the projection of the mouthpiece portion 12 on the aforementioned projection plane is roughly elliptical, and the mouthpiece has a structure suitable for the user to hold in the mouth.

In some embodiments, the first touch surface 311 and the second touch surface 312 are oppositely disposed in the mouthpiece portion 12 along the second direction L3. That is, the first touch surface 311 and the second touch surface 312 each extend along the first direction L2. This allows the user to quickly touch the portions of the mouthpiece portion 12 corresponding to the first touch surface 311 and the second touch surface 312 when gripping the mouthpiece portion 12 in the use's mouth, thereby increasing the generation speed of the first capacitance signal.

In some embodiments, a length of the projection of the gripping portion 11 on the projection plane along the first direction L2 is greater than that along the second direction L3, and the projection of the mouthpiece portion 12 on the projection plane is located in the middle of the projection of the gripping portion 11 on the projection plane.

The second touch sensing portion 32 includes a third touch surface 321 and a fourth touch surface 322. The third touch surface 321 and the fourth touch surface 322 are disposed on two adjacent sides of the grip portion 11. The third touch surface 321 is located on the same side of the housing 10 as the first touch surface 311, or the fourth touch surface 322 is located on the same side of the housing 10 as the second touch surface 312.

In some embodiments, the second touch sensing portion 32 generates the second capacitance signal when the portion of the grip portion 11 corresponding to the third touch surface 321 is touched and the portion of the grip portion 11 corresponding to the fourth touch surface 322 is touched.

In some embodiments, the second touch sensing portion 32 generates the second capacitance signal when the portion of the grip portion 11 corresponding to the third touch surface 321 or the portion of the grip portion 11 corresponding to the fourth touch surface 322 is touched.

Since a user may grip the opposite sides of the gripping portion 11 along the first direction L2 when holding the gripping portion 11, or may grip the opposite sides of the gripping portion 11 along the second direction L3, or may even grip at least three sides of the gripping portion 11, configuring the second touch sensing portion 32 to generate the second capacitive signal when the corresponding portion of the gripping portion 11 to either the third touch-sensitive surface 321 or the fourth touch-sensitive surface 322 is touched increases the likelihood of generating the second capacitive signal.

In some embodiments, please referring to FIG. 3, the touch sensing element 30 further includes a first connecting portion 33. The first connecting portion 33 is connected between the first touch surface 311 and the third touch surface 321 located on the same side of the housing 10, or the first connecting portion 33 is connected between the second touch surface 312 and the fourth touch surface 322 located on the same side of the housing 10. This thereby enables the first touch sensing portion 31 and the second touch sensing portion 32 to form an integrated structure under the connection of the first connecting portion 33, and also enables the first connecting portion 33 between the first touch sensing portion 31 and the second touch sensing portion 32 to have a shorter length, thus reducing the material used for manufacturing the touch sensing component 30.

The touch sensing element 30 further includes a second connecting portion 34. The third touch surface 321 and the fourth touch surface 322 are connected through the second connecting portion 34, with the first touch surface 311 and the third touch surface 321 located on the same side of the housing 10. Accordingly, the first touch surface 311 and the fourth touch surface 322 are disposed on two adjacent sides of the third touch surface 321, which facilitates the rapid assembly of the first touch surface 311, the second connecting portion 34, the third touch surface 321, and the fourth touch surface 322 onto the housing 10.

In some embodiments, the touch sensing element 30 further includes the second connecting portion 34. The third touch surface 321 and the fourth touch surface 322 are connected through the second connecting portion 34 to enable the third touch-sensitive surface 321 and the fourth touch-sensitive surface 322 to form an integrated structure.

Along the orthographic projection direction L1, a height of the second connecting portion 34 is smaller than that of the third touch surface 321 and that of the fourth touch surface 322. This enables the third touch surface 321 and the fourth touch surface 322 to be easily bent via the second connecting portion 34, thereby enhancing the efficiency of assembling the third touch surface 321 and the fourth touch surface 322 into the grip portion 11.

The first touch surface 311 and the second touch surface 312 are respectively configured with a plurality of touch points. When any touch point on the first touch surface 311 and any touch point on the second touch surface 312 are touched, the first touch sensing portion 31 generates the first capacitance signal, thereby improving the generation sensitivity of the first capacitance signal.

Similarly, the third touch surface 321 and the fourth touch surface 322 are respectively configured with a plurality of touch points. When either any touch point on the third touch surface 321 or any touch point on the fourth touch surface 322 is touched, the second touch sensing portion 32 generates the second capacitance signal, thereby improving the generation sensitivity of the second capacitance signal.

Since the first touch-sensitive surface 311, the second touch-sensitive surface 312, the third touch-sensitive surface 321, and the fourth touch-sensitive surface 322 each have a plurality of touch points, this can effectively improve the efficiency of generating the first capacitive signal and the second capacitive signal, facilitating the control module 40 to more quickly control the activation of the atomizing core 20 based on the first capacitive signal and the second capacitive signal, thereby enabling the atomizing core 20 to have a faster response efficiency.

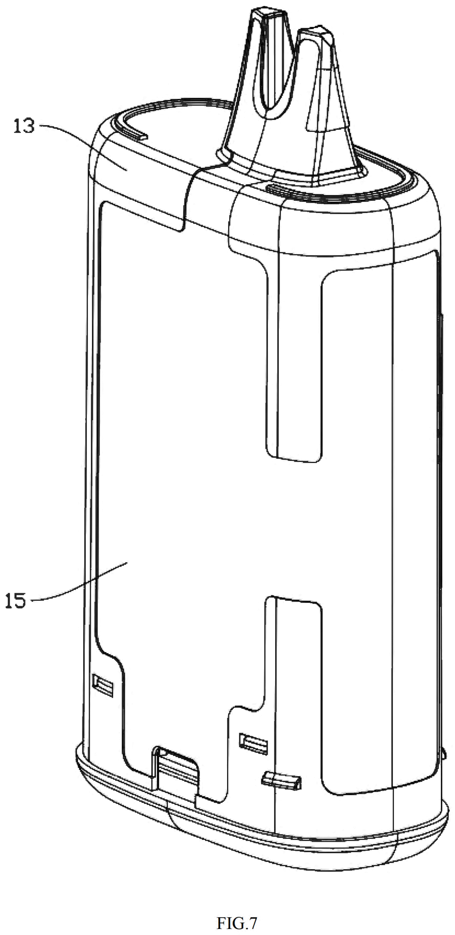

In some embodiment, please referring to FIG. 1 and FIG. 7 the housing 10 includes a first shell 13 and a second shell 14. The first shell 13 is disposed in the second shell 14, and a limiting groove 15 is formed on either the first shell 13 or the second shell 14. The touch sensing element 30 is disposed in the limiting groove 15. By providing the limiting groove 15 for receiving the touch sensing element 30, the difficulty of assembling the touch sensing element 30 is reduced, and the assembly efficiency is improved.

In some embodiment, please referring to FIG. 7 the limiting groove 15 is formed on the outer side of the first shell 13, with the opening of the limiting groove 15 facing the second shell 14. This facilitates installing the touch sensing element 30 into the limiting groove 15 and assembling the second shell 14 over the outer side of the first shell 13 and the touch sensing element 30.

In some embodiment, please referring to FIG. 3 the touch sensing element 30 further includes a third connecting portion 35. The third connecting portion 35 is connected to a side of the second touch sensing portion 32 away from the first touch sensing portion 31 and configured to be directly electrically connected to the control module 40. By providing the third connecting portion 35, the touch sensing element 30 can be effectively connected to the control module 40, thereby enhancing the connection stability between the touch sensing element 30 and the control module 40.

In some embodiment, the first connecting portion 33, the second connecting portion 34, and the third connecting portion 35 are each connected to the third touch surface 321. The first connecting portion 33 and the third connecting portion 35 are oppositely connected to the third touch surface 321. This facilitates direct connection between the touch sensing element 30 and the control module 40 through the third connecting portion 35, further enhancing the connection stability between the touch sensing element 30 and the control module 40.

In some embodiment, the touch sensing element 30 further includes a fourth connecting portion 36. The fourth connecting portion 36 is connected between the first touch surface 311 and the second touch surface 312, and the fourth connecting portion 36 is located on the same side of the housing 10 as the fourth touch surface 322. Thus, during the assembly of the touch sensing element 30 onto the housing 10, the assembly can be performed using the first touch surface 311 and the third touch surface 321 as references. After assembling the first touch surface 311, the first connecting portion 33, and the third touch surface 321, the second touch surface 312 and the fourth touch surface 322 are then assembled. This approach improves the assembly efficiency of the touch sensing element 30 and reduces its assembly difficulty.

In some embodiment, the touch sensing element 30 is a flexible circuit board, which allows the touch sensing element 30 to be easily cut and conveniently assembled in the housing 10. The electronic atomization device further comprises a plane perpendicular to a central axis of the atomization channel, and the plane having a first direction L2 and a second direction L3 perpendicular to the first direction. A length of a first projection of the mouthpiece portion onto the plane along the first direction L2 is greater than a length of the first projection along the second direction L3. A length of a second projection of the gripping portion 11 onto the plane along the first direction L2 is greater than a length of the second projection along the second direction L3. The second touch sensing portion 32 includes a third touch surface 321 and a fourth touch surface 322 disposed on two adjacent sides of the grip portion 11. The third touch surface 321 and the first touch surface 311 are located on the same side of the housing 10. The touch sensing element 30 further includes a second connecting portion 34, the second connecting portion 34 is connected between the third touch surface 321 and the fourth touch surface 322. Along the central axis of the atomization channel, a height of the second connecting portion 34 is smaller than a height of the third touch surface 321 and smaller than a height of the fourth touch surface 322.

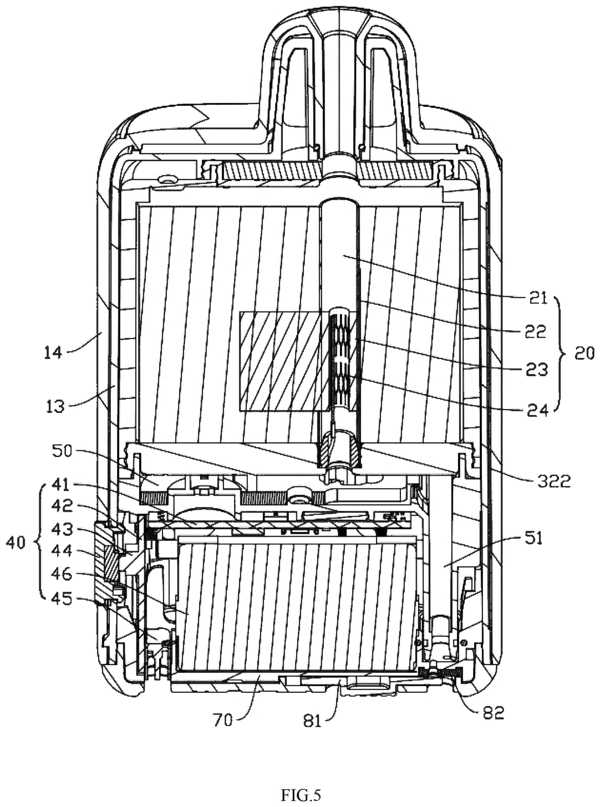

In some embodiment, please referring to FIGS. 5-6 the electronic atomization device 100 further includes a bracket 50 and a liquid storage assembly 60. The bracket 50 defines a receiving room. The liquid storage assembly 60 includes a third shell 61, a first sealing member 62, a second sealing member 63, and liquid storage cotton 64. The first sealing member 62 is hermetically connected between the mouthpiece portion and the third shell 61, and the second sealing member 63 is hermetically connected between the bracket 50 and the third shell 61.

The first sealing member 62 and the second sealing member 63 are located on opposite sides of the third shell 61. The atomizing core 20 extends through the third shell 61, and the first sealing member 62, the second sealing member 63, the atomizing core 20, and the third shell 61 together enclose a liquid storage cavity 65. The liquid storage cotton 64 is disposed in the liquid storage cavity 65 and configured to retain the aerosol substrate contained in the liquid storage cavity 65.

The atomizing core 20 includes an atomizing tube 22, liquid guiding cotton 23, and a heating element 24. The atomizing tube 22 defines the atomizing channel 21. The liquid guiding cotton 23 and the heating element 24 are respectively disposed in the atomizing tube 22, with the liquid guiding cotton 23 positioned between the atomizing tube 22 and the heating element 24 and configured to partially extend through the atomizing tube 22 into the liquid storage cotton 64.

In some embodiment, the control module 40 includes a first control circuit board 41, a second control circuit board 42, a control switch 43, a control button 44, a charging interface 45, and a storage battery 46. The first control circuit board 41 and the second control circuit board 42 are disposed on the bracket 50. The first control circuit board 41 is perpendicular to and electrically connected to the second control circuit board 42. The first control circuit board 41 and the second control circuit board 42 are in L-shaped. This avoids the situation where the first control circuit board 41 and the second control circuit board 42, when arranged in a straight line along the orthographic projection direction L1, occupy the assembly space of the liquid storage assembly 60 and impair the accommodation capacity of the liquid storage compartment 65. Thus, the space occupation of the first control circuit board 41 and the second control circuit board 42 is effectively reduced. The storage battery 46 is disposed in the receiving room of the bracket 50. The first control circuit board 41 and the second control circuit board 42 face the storage battery 46. The charging interface 45 is connected to the second control circuit board 42. The control switch 43 is disposed on the second control circuit board 42. The control button 44 is disposed on the gripping portion 11 in a pressable manner and is directly opposite the control switch 43, and can be used to control the startup, shutdown, power switching, and the like of the electronic atomization device 100.

In some embodiment, the bracket 50 is further configured to form an air inlet channel 51. The housing 10 is provided with an air inlet hole 16. The air inlet channel 51 is connected between the air inlet hole 16 and the atomizing channel 21, and the air inlet channel 51 is not directly aligned with the atomizing channel 21. This effectively reduces the flow of condensate formed by the cooling of residual aerosol in the atomizing channel 21 into the air inlet channel 51, thereby lowering the risk of condensate leaking to the exterior of the electronic atomization device 100.

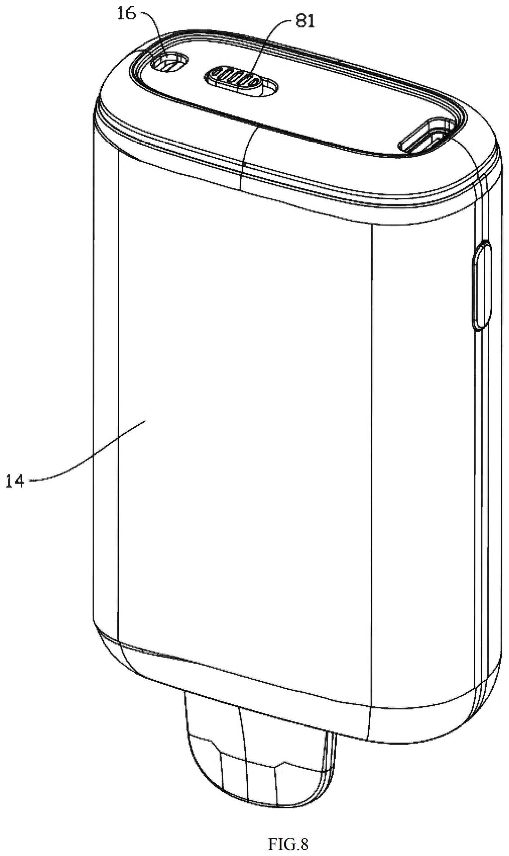

Please referring to FIG. 5, FIG.6 and FIG. 8, the electronic atomization device 100 further includes a mounting base 70, an air adjusting element 81, and a third sealing member 82. The mounting base 70 is disposed in the grip portion 11. The third sealing member 82 is hermetically connected between the air inlet hole 16 and the air inlet channel 51. The air adjusting element 81 is movably connected to the mounting base 70 and configured to adjust the opening degree of the air inlet hole 16. The air adjusting element 81 extends out of the side of the grip portion 11 away from the mouthpiece portion 12 and has a first position and a second position relative to the mounting base 70. When the air adjusting element 81 is in the first position, a portion of the air inlet hole 16 connects the air inlet channel 51 with the outside. When the air adjusting element 81 is in the second position, the entire air inlet hole 16 connects the air inlet channel 51 with the outside. This achieves adjustment of the opening degree of the air inlet hole 16.

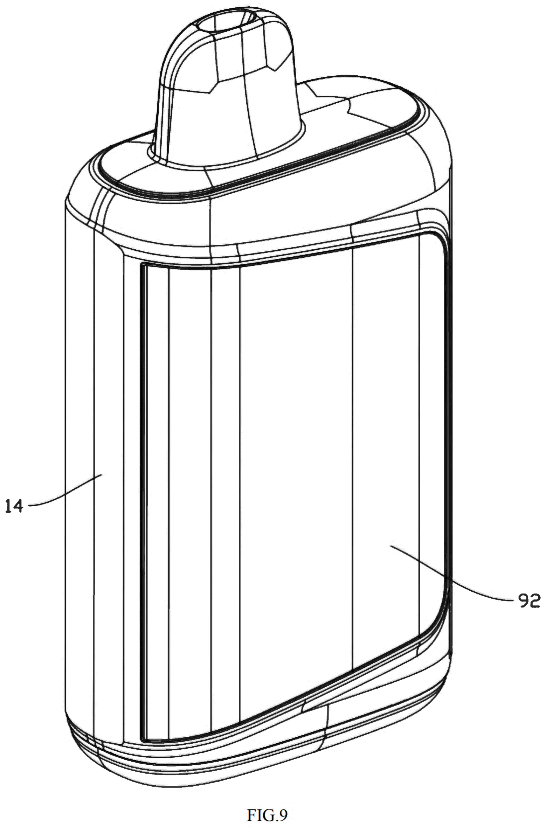

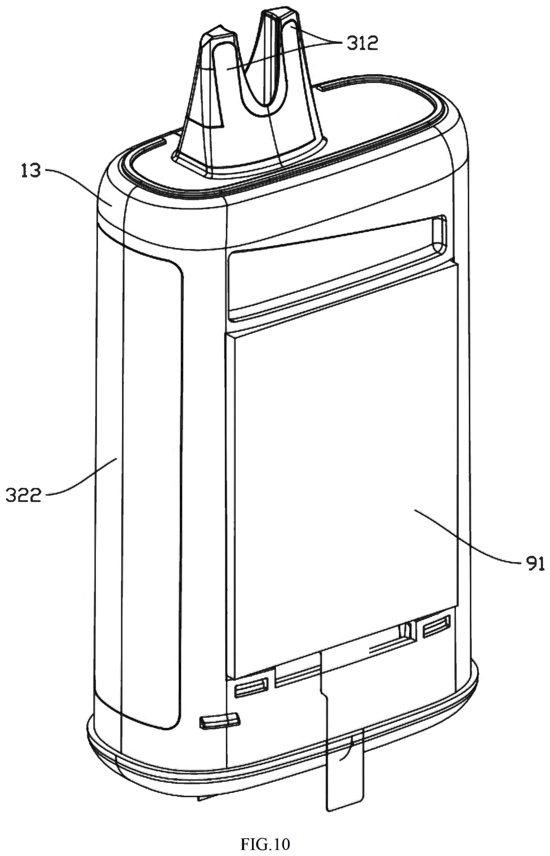

In some embodiment, please referring to FIGS. 9-10 the electronic atomization device 100 further includes a display module 91. The display module 91 is disposed on the housing 10 corresponding to the grip portion 11 and located on the opposite side of the third touch surface 321. The display module 91 is electrically connected to the control module 40 and configured to display information such as the remaining amount of the aerosol substrate in the liquid storage cavity 65 and the power level of the storage battery 46.

In some embodiment, the electronic atomization device 100 further includes a transparent member 92. The transparent member 92 is disposed on the grip portion 11 and covers the display module 91 to provide protection for the display module 91.

### Embodiment 2

An electronic atomization device 100 is a device for generating aerosol from an aerosol substrate. Typically, the electronic atomization device 100 includes an atomizer 103 and a mouthpiece portion 12. The atomizer 103 generates aerosol from the aerosol substrate by heating, and the aerosol flows to the exterior of the electronic atomization device 100 through an air exhaust channel 102 in the mouthpiece portion 12.

In the prior art, the aerosol scatters while flowing to the exterior of the electronic atomization device 100 through the air exhaust channel 102 in the mouthpiece portion 12, resulting in easy loss of the aerosol's fragrance.

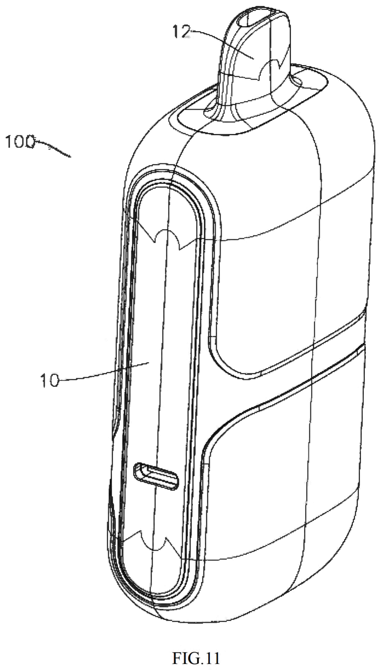

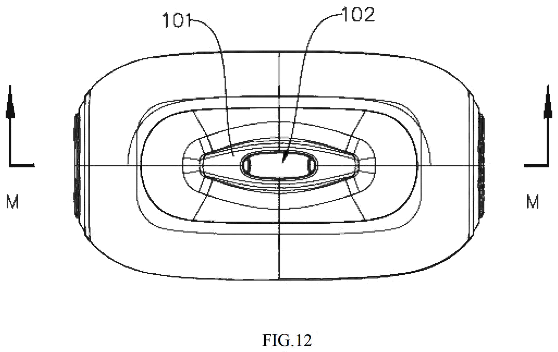

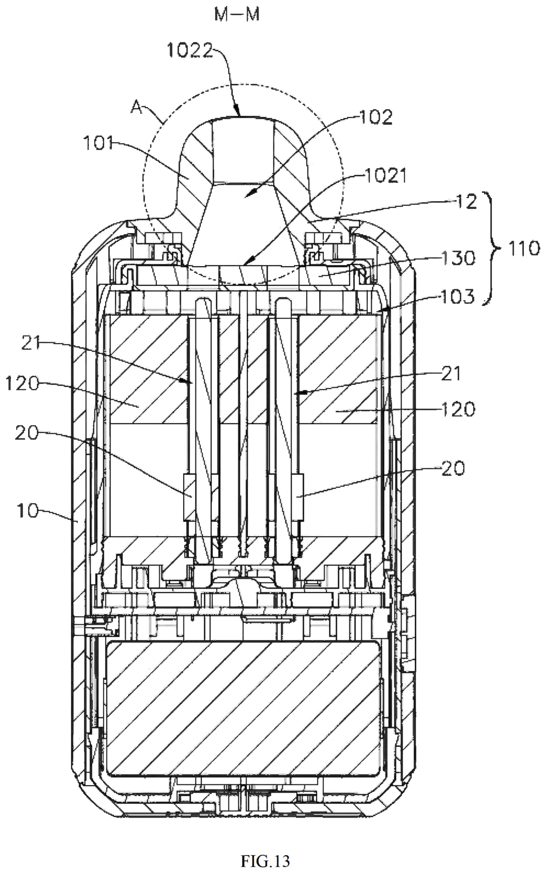

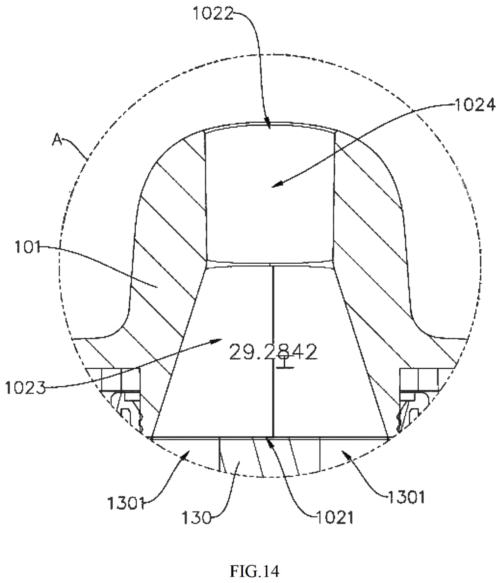

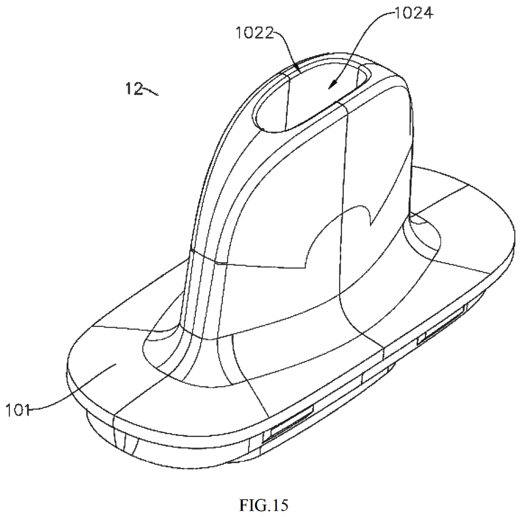

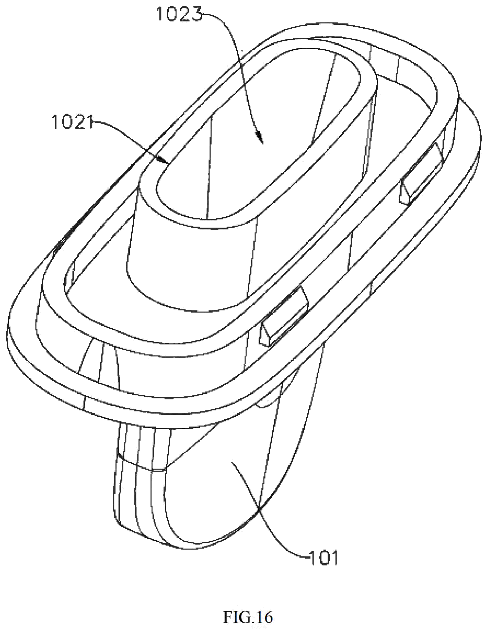

In view of this, please referring to FIGS. 11-16 the present application provides a mouthpiece portion, an atomizing assembly 110, and an electronic atomization device. Since the mouthpiece portion 12 includes a main body 101, with an air exhaust channel 102 disposed in the main body 101, and the air exhaust channel 102 has opposing air inlet ends 1021 and air outlet ends 1022. The cross-sectional area of the air outlet end 1022 is smaller than that of the air inlet end 1021. When the aerosol flows into the air exhaust channel 102 from the air inlet end 1021 and out of the air exhaust channel 102 from the air outlet end 1022, the flow rate of the aerosol at the air outlet end 1022 will be greater than that at the air inlet end 1021. Thus, the air inlet end 1021 to better gather the aerosol and the aerosol is discharged from the air outlet end 1022, preventing aerosol scattering and further preventing the loss of the aerosol's fragrance.

The mouthpiece portion 12 includes the main body 101, with an air exhaust channel 102 disposed in the main body 101, and the air exhaust channel 102 has opposing air inlet ends 1021 and air outlet ends 1022. The aerosol can flow into the air exhaust channel 102 from the air inlet end 1021 and out of the air exhaust channel 102 from the air outlet end 1022. The cross-sectional area of the air outlet end 1022 is smaller than that of the air inlet end 1021.

The atomizing assembly 110 includes the atomizer 103, and the atomizer 103 is configured to generate aerosol from an aerosol substrate 120. The aerosol can flow into the air exhaust channel 102 from the air inlet end 1021, flow out of the air exhaust channel 102 from the air outlet end 1022, and be discharged to the exterior of the electronic atomization device 100.

The cross-sectional area of the air exhaust channel 102 may decrease continuously from the air inlet end 1021 to the air outlet end 1022, such that the cross-sectional area of the air outlet end 1022 is smaller than that of the air inlet end 1021. Alternatively, the cross-sectional area of the air exhaust channel 102 may decrease stepwise from the air inlet end 1021 to the air outlet end 1022, such that the cross-sectional area of the air outlet end 1022 being smaller than that of the air inlet end 1021.

The air exhaust channel 102 may be configured as a conical hole or an elliptical conical hole. Alternatively, the air exhaust channel 102 may be configured as a combination of a cylindrical hole and a conical hole. Alternatively, the air exhaust channel 102 may be configured as a combination of an elliptical cylindrical hole and an elliptical conical hole. Additionally, the air exhaust channel 102 may be configured in other shapes. Correspondingly, the cross-sections of the air outlet end 1022 and the air inlet end 1021 may each be configured in shapes such as a circle or an ellipse. The flow direction of the aerosol may be approximately along the axial direction of the air exhaust channel 102.

The cross-section of the air outlet end 1022 may be a section of the air outlet end 1022 that is perpendicular to the flow direction of the aerosol, and the cross-section of the air inlet end 1021 may be a section of the air inlet end 1021 that is perpendicular to the flow direction of the aerosol. For example, the cross-section of the air outlet end 1022 is a section of the air outlet end 1022 perpendicular to the axis of the air exhaust channel 102, and the cross-section of the air inlet end 1021 is a section of the air inlet end 1021 perpendicular to the axis of the air exhaust channel 102.

Since the mouthpiece portion 12 includes the main body 101 that the air exhaust channel 102 is disposed, the air exhaust channel 102 has opposing air inlet ends 1021 and air outlet ends 1022 , and the cross-sectional area of the air outlet end 1022 is smaller than that of the air inlet end 1021, during the process where the aerosol flows from the air inlet end 1021 into the interior of the exhaust channel 102 and then flows out of the exhaust channel 102 from the air outlet end 1022, the flow rate of the aerosol at the air outlet end 1022 is greater than that at the air inlet end 1021. This allows the aerosol to be better gathered via the air inlet end 1021 and discharged from the air outlet end 1022, preventing aerosol scattering and further avoiding loss of the aerosol's fragrance.

Please referring to FIGS. 11-16, the air exhaust channel 102 includes a first air channel 1023 and a second air channel 1024 in communication with each other. The end of the first air channel 1023 away from the second air channel 1024 is the air inlet end 1021, and the end of the second air channel 1024 away from the first air channel 1023 is the air outlet end 1022.

By adopting the above solution, when the aerosol flows into the first air channel 1023 from the air inlet end 1021 and continues to flow out of the second air channel 1024 from the air outlet end 1022, the flow rate of the aerosol at the air outlet end 1022 is greater than that at the air inlet end 1021. This enables the aerosol to be better gathered via the air inlet end 1021 and discharged from the air outlet end 1022, preventing aerosol scattering and further avoiding loss of the aerosol's fragrance.

The cross-sectional area of the first air channel 1023 gradually decreases from the air inlet end 1021 toward the second air channel 1024.

With this configuration, the aerosol can be better gathered via the first air channel 1023, preventing the aerosol from scattering.

Please referring to FIGS. 11-16, the cross-sectional area of the second air channel 1024 remains unchanged from the first air channel 1023 toward the air outlet end 1022.

With this configuration, the flow rate and flow direction of the aerosol in the second air channel 1024 can be more uniform, allowing the aerosol flowing out of the second air channel 1024 from the air outlet end 1022 to be better received by the user's mouth.

For example, the first air channel 1023 is configured as a conical hole and the second air channel 1024 as a cylindrical hole, such that each cross-section of the air exhaust channel 102 is circular. Alternatively, the first air channel 1023 is configured as an elliptical conical hole and the second air channel 1024 as an elliptical cylindrical hole, such that each cross-section of the air exhaust channel 102 is elliptical. Alternatively, the first air channel 1023 is configured as an elliptical conical hole and the second air channel 1024 as a cylindrical hole, such that all cross-sections of the first air channel 1023 are elliptical and the cross-section of the second air channel 1024 is circular. Alternatively, the first air channel 1023 is configured as a conical hole and the second air channel 1024 as an elliptical cylindrical hole, such that all cross-sections of the first air channel 1023 are circular and the cross-section of the second air channel 1024 is elliptical.

It should be noted that the first air channel 1023 and the second air channel 1024 may also be respectively configured as holes of other shapes.

Optionally, the distance H between the air inlet end 1021 and the second air channel 1024 ranges from 11.5 mm to 13.5 mm, such as 11.5 mm, 12.0 mm, 12.5 mm, 13.0 mm, or 13.5 mm.

With this configuration, the aerosol can be better gathered via the first air channel 1023, preventing the aerosol from scattering.

It can be understood that the distance H between the air inlet end 1021 and the second air channel 1024 may be defined as the length of the first air channel 1023.

The first air channel 1023 and the second air channel 1024 are coaxially arranged.

With this configuration, the aerosol can flow more smoothly during the process of flowing from the air inlet end 1021 into the interior of the first airway 1023 and then continuing to flow out of the second airway 1024 from the air outlet end 1022, and will not generate turbulence due to obstruction. This thereby allows the aerosol flowing out of the second airway 1024 from the air outlet end 1022 to be better received by the user.

Optionally, the cross-sectional area of the air outlet end 1022 is 25% to 35% of that of the air inlet end 1021, such as 25%, 30%, or 35%.

With this configuration, during the process where the aerosol flows from the air inlet end 1021 into the interior of the exhaust channel 102 and then flows out of the exhaust channel 102 from the air outlet end 1022, the flow velocity of the aerosol at the air outlet end 1022 will be greater than that at the air inlet end 1021. This allows the air inlet end 1021 to better gather the aerosol together and discharge it from the air outlet end 1022.

Exemplarily, the cross-sectional area of the air outlet end 1022 is 24.4 mm², and that of the air inlet end 1021 is 79 mm².

With this configuration, the aerosol can be better gathered via the air inlet end 1021 and discharged from the air outlet end 1022.

The flow rate of the aerosol at the air outlet end 1022 may be twice that at the air inlet end 1021. Experimental verification demonstrates that the aerosol flowing out of the second air channel 1024 is better received by the user's mouth, resulting in an improved user experience.

In another embodiment, the cross-sectional area of the second air channel 1024 gradually decreases from the first air channel 1023 toward the air outlet end 1022.

With this configuration, the aerosol can be better gathered via the second air channel 1024, preventing the aerosol from scattering.

In yet another embodiment, the cross-sectional area of the first air channel 1023 remains unchanged from the air inlet end 1021 toward the second air channel 1024, while the cross-sectional area of the second air channel 1024 gradually decreases from the first air channel 1023 toward the air outlet end 1022.

With this configuration, the aerosol can be better gathered via the second air channel 1024, preventing the aerosol from scattering.

Please referring to FIGS. 11-16 an embodiment of the present application provides an atomizing assembly 110. The atomizing assembly 110 includes the atomizer 103 and the mouthpiece portion 12. The atomizer 103 is provided with an atomizing channel 21, and the atomizing channel 21 is arranged in correspondence with the air inlet end 1021.

Since the mouthpiece portion 12 of the atomizing assembly 110 includes the body 101, the exhaust channel 102 is disposed inside the body 101, the exhaust channel 102 has the opposite air inlet end 1021 and air outlet end 1022, and the cross-sectional area of the air outlet end 1022 is smaller than that of the air inlet end 1021, during the process where the aerosol flows from the air inlet end 1021 into the interior of the exhaust channel 102 and then flows out of the exhaust channel 102 from the air outlet end 1022, the flow velocity of the aerosol at the air outlet end 1022 will be greater than that at the air inlet end 1021. This allows the air inlet end 1021 to better gather the aerosol together and discharge it from the air outlet end 1022, thereby preventing the aerosol from dispersing and further preventing the loss of the aerosol's odor.

It should be noted that the atomizer 103 may include the atomizing core 20, which is arranged in correspondence with the atomizing channel 21 and configured to generate aerosol from the aerosol substrate 120.

In some embodiment, two atomizing channels 21 are provided, and both of the two atomizing channels 21 are arranged in correspondence with the air inlet end 1021.

By adopting the above solution, the aerosol can not only be better gathered via the air inlet end 1021 and discharged from the air outlet end 1022, but also the aerosols in the two atomizing channels 21 can be fully mixed via the air exhaust channel 102.

It is understandable that when two atomization channels 21 are provided, two atomizing cores 20 and two liquid storage compartments for storing the aerosol matrix 120 may also be provided, and the atomizing cores 20, the liquid storage compartments, and the atomization channels 21 are arranged in a one-to-one correspondence. The two liquid storage compartments are completely independent. The two types of aerosols generated from the aerosol-generating matrix in the two liquid storage compartments respectively reach the air inlet end 1021 of the mouthpiece portion 12 through the corresponding atomization channels 21, then the two types of aerosols are fully mixed together in the exhaust channel 102, and finally discharged together through the air outlet end 1022.

The cross-section of the air inlet end 1021 is elliptical, and the arrangement direction of the two atomizing channels 21 is parallel to the major axis of the ellipse.

With this structure, it is convenient to arrange the positions of the two atomizing channels 21, as well as the positions of the two atomizing cores 20 and two liquid storage chambers respectively corresponding to the two atomizing channels 21.

Optionally, the atomizing assembly 110 further includes a liquid absorbing member 130. The liquid absorbing member 130 is disposed at the air inlet end 1021, and the inner wall surface of the air inlet end 1021 and the liquid absorbing member 130 are at least partially arranged in correspondence with each other along the axial direction.

With this structure, when the condensate formed in the air exhaust channel 102 flows back, it can be more effectively absorbed by the liquid absorbing member 130, thereby preventing the condensate from flowing out.

It should be noted that the liquid absorbing member 130 may be configured as liquid absorbing cotton or the like. The liquid absorbing member 130 may be provided with an avoidance hole 1301 in correspondence with the atomizing channel 21, and the aerosol in the atomizing channel 21 can reach the air inlet end 1021 of the mouthpiece portion 12 through the avoidance hole 1301.

Exemplarily, the first air channel 1023 is configured as an elliptical conical hole, and the second air channel 1024 is configured as an elliptical cylindrical hole, so that each cross-section of the air exhaust channel 102 is elliptical.

With this structure, the airflow formed by the aerosol can be smoothly guided through the first air channel 1023, reducing turbulence. This allows the aerosol flowing out of the second air channel 1024 to be more smoothly received by the user's mouth, resulting in an improved user experience. Additionally, the fragrance of the aerosol is better delivered, the aerosol is more gathered, and the taste transmission is enhanced. Meanwhile, the first air channel 1023 facilitates better backflow of condensate, preventing the condensate from flowing to the second air channel 1024 and further enhancing the user experience.

Please referring to FIGS. 11-16, an embodiment of the present application provides an electronic atomization device 100, comprising the atomizing assembly 110.

Since the mouthpiece portion 12 of its atomizing assembly 110 includes the body 101, the exhaust channel 102 is disposed inside the body 101, the exhaust channel 102 has the opposite air inlet end 1021 and air outlet end 1022, and the cross-sectional area of the air outlet end 1022 is smaller than that of the air inlet end 1021, during the process where the aerosol flows from the air inlet end 1021 into the interior of the exhaust channel 102 and then flows out of the exhaust channel 102 from the air outlet end 1022, the flow velocity of the aerosol at the air outlet end 1022 will be greater than that at the air inlet end 1021. Therefore, the air inlet end 1021 can better gather the aerosol together and discharge it from the air outlet end 1022, thereby preventing the aerosol from dispersing and further preventing the loss of the aerosol's odor.

It should be noted that the electronic atomization device 100 provided in the embodiment of the present application may further includes a housing 10, a circuit board, a power supply, a sealing member, and the like, which are not repeated herein.

For ease of description, spatially relative terms such as "on top of," "above," "on the upper surface of," and "upper" may be used herein to describe the spatial positional relationship between one device or feature and other devices or features as shown in the drawings. It should be understood that spatially relative terms are intended to encompass orientations of the device in use or operation other than the orientation depicted in the drawings. For example, if the device in the drawings is inverted, a device described as "above another device or structure" or "on top of another device or structure" will then be positioned as "below the other device or structure" or "under the other device or structure." Thus, the exemplary term "above" can encompass both an orientation of "above" and "below." The device may also be oriented in other ways (rotated 90 degrees or at other orientations), and the spatially relative descriptors used herein should be interpreted accordingly.

Additionally, it should be noted that the use of terms such as "first" and "second" to define components is merely for the convenience of distinguishing the corresponding components. Unless otherwise specified, the aforementioned terms have no special meaning and thus shall not be construed as limiting the scope of protection of the present application.

The above are merely preferred embodiments of the present application and are not intended to limit the present application. For those skilled in the art, various modifications and variations may be made to the present application. Any modification, equivalent replacement, or improvement made within the spirit and principle of the present application shall be included in the scope of protection of the present application.

## Claims

1. An electronic atomization device, comprising:
a housing comprising a grip portion and a mouthpiece portion connected with the grip portion;
an atomizing core disposed in the grip portion, the atomizing core defining an atomizing channel in communication with the mouthpiece portion;
and a touch sensing element and a control module, wherein the control module is electrically and respectively connected to the touch sensing element and the atomizing core, and the touch sensing element and the control module are disposed in the housing;
wherein the touch sensing element comprises a first touch sensing portion and a second touch sensing portion of an integrated structure, the first touch sensing portion is disposed at the mouthpiece portion and configured to generate a first capacitance signal, the second touch sensing portion is disposed at the grip portion and configured to generate a second capacitance signal, and the control module is configured to control the atomizing core to activate or deactivate based on the first capacitance signal and the second capacitance signal.

2. The electronic atomization device of claim 1, wherein the first touch sensing portion includes a first touch surface and a second touch surface, the first touch surface and the second touch surface are oppositely disposed in the mouthpiece portion, and the first touch sensing portion generates the first capacitance signal when a portion of the mouthpiece portion corresponding to the first touch surface and/or the second touch surface is touched.

3. The electronic atomization device of claim 2, taking a direction from the mouthpiece portion toward the gripping portion as an orthographic projection direction L1, and defining a plane perpendicular to the orthographic projection direction L1 as a projection plane;
wherein a first direction L2 and a second direction L3 are located in this projection plane, and the first direction L2 is perpendicular to the second direction L3;
in the projection plane, a first projected length of the mouthpiece portion along the second direction L2 is greater than a second projected length of the mouthpiece portion along the second direction.

4. The electronic atomization device of claim 3, wherein a length of the projection of the grip portion along the first direction is greater than that along the second direction;
the second touch sensing portion includes a third touch surface and a fourth touch surface, the third touch surface and the fourth touch surface are disposed on two adjacent sides of the grip portion; the third touch surface and the first touch surface are located on the same side of the housing;
wherein the second touch sensing portion generates the second capacitance signal when the portion of the grip portion corresponding to the third touch surface or the portion of the grip portion corresponding to the fourth touch surface is touched.

5. The electronic atomization device of claim 4, wherein the touch sensing element further includes a first connecting portion, and the first connecting portion is connected between the first touch surface and the third touch surface.

6. The electronic atomization device of claim 5, wherein the touch sensing element further includes a second connecting portion, the second connecting portion is connected between the third touch surface and the fourth touch surface.

7. The electronic atomization device of claim 6, wherein the touch sensing element further includes a third connecting portion, and the first connecting portion and the third connecting portion are connected to two opposite sides of the third touch surface.

8. The electronic atomization device of claim 7, wherein the touch sensing element further includes a fourth connecting portion, the fourth connecting portion is connected between the first touch surface and the second touch surface, and the fourth connecting portion and the fourth touch surface are located on the same side of the housing.

9. The electronic atomization device of claim 4, wherein the touch sensing element further includes a second connecting portion, the second connecting portion is connected between the third touch surface and the fourth touch surface;
wherein a height of the second connecting portion along the orthographic projection direction is smaller than a height of the third touch surface and smaller than a height of the fourth touch surface.

10. The electronic atomization device of claim 4, wherein the first touch surface and the second touch surface each have a plurality of touch points; and/or, the third touch surface and the fourth touch surface each have a plurality of touch points.

11. The electronic atomization device of claim 10, wherein the first touch sensing portion generates the first capacitance signal when any touch point on the first touch surface and any touch point on the second touch surface are touched.

12. The electronic atomization device of claim 10, wherein the second touch sensing portion generates the second capacitance signal when any touch point on the third touch surface or any touch point on the fourth touch surface is touched.

13. The electronic atomization device of claim 1, wherein the housing includes a first shell and a second shell, the first shell is disposed inside the second shell, a limiting groove is defined in the first shell or the second shell, and the touch sensing element is disposed in the limiting groove.

14. The electronic atomization device of claim 13, wherein the limiting groove is defined on an outer side of the first shell, and an opening of the limiting groove faces the second shell.

15. The electronic atomization device of claim 1, wherein the touch sensing element further includes a third connecting portion, the third connecting portion is connected to a side of the second touch sensing portion away from the first touch sensing portion, and is configured to be directly electrically connected to the control module.

16. The electronic atomization device of claim 2, wherein the touch sensing element is a flexible circuit board, the electronic atomization device further comprises a plane perpendicular to a central axis of the atomizing channel, and the plane has a first direction and a second direction perpendicular to the first direction;
a length of a first projection of the mouthpiece portion onto the plane along the first direction is greater than a length of the first projection along the second direction;
a length of a second projection of the gripping portion onto the plane along the first direction is greater than a length of the second projection along the second direction;
the second touch sensing portion includes a third touch surface and a fourth touch surface, the third touch surface and the fourth touch surface are disposed on two adjacent sides of the grip portion; the third touch surface and the first touch surface are located on the same side of the housing;
the touch sensing element further includes a second connecting portion, the second connecting portion is connected between the third touch surface and the fourth touch surface;
along the central axis of the atomizing channel, a height of the second connecting portion is smaller than a height of the third touch surface and smaller than a height of the fourth touch surface.

## Amended claims

### Amended claims in accordance with Rule 137(2) EPC.

1. An electronic atomization device, comprising:
a housing (10) comprising a grip portion (11) and a mouthpiece portion (12) connected with the grip portion (11);
an atomizing core (20) disposed in the grip portion (11), the atomizing core (20) defining an atomizing channel (21) in communication with the mouthpiece portion (12);
and a touch sensing element (30) and a control module (40), wherein the control module (40) is electrically and respectively connected to the touch sensing element (30) and the atomizing core (20), and the touch sensing element (30) and the control module (40) are disposed in the housing (10);
**characterized in that** the touch sensing element (30) comprises a first touch sensing portion (31) and a second touch sensing portion (32) of an integrated structure, the first touch sensing portion (31) is disposed at the mouthpiece portion (12), in response to a determination that the mouthpiece portion (12) is held in user's mouth, the first touch sensing portion (31) generates a first capacitance signal, the second touch sensing portion (32) is disposed at the grip portion (11), in response to a determination that the grip portion is held by a user, the second touch sensing portion (32) generates a second capacitance signal, and the control module (40) is configured to control the atomizing core (20) to activate or deactivate based on the first capacitance signal and the second capacitance signal.

2. The electronic atomization device of claim 1, wherein the first touch sensing portion (31) includes a first touch surface (311) and a second touch surface (312), the first touch surface (311) and the second touch surface (312) are oppositely disposed in the mouthpiece portion (12), and the first touch sensing portion (31) generates the first capacitance signal when a portion of the mouthpiece portion (12) corresponding to the first touch surface (311) and/or the second touch surface (312) is touched.

3. The electronic atomization device of claim 2,
wherein a first direction (L2) is perpendicular to a second direction (L3);
a first length of the mouthpiece portion (12) along the first direction (L2) is greater than a second length of the mouthpiece portion (12) along the second direction (L3), the first touch surface (311) and the second touch surface (312) are oppositely disposed in the mouthpiece portion (12) along the second direction (L3).

4. The electronic atomization device of claim 3, wherein a length of the projection of the grip portion (11) along the first direction (L2) is greater than that along the second direction (L3);
the second touch sensing portion (32) includes a third touch surface (321) and a fourth touch surface (322), the third touch surface (321) and the fourth touch surface (322) are disposed on two adjacent sides of the grip portion (11); the third touch surface (321) and the first touch surface (311) are located on the same side of the housing (10);
wherein the second touch sensing portion (32) generates the second capacitance signal when the portion of the grip portion (11) corresponding to the third touch surface (321) or the portion of the grip portion (11) corresponding to the fourth touch surface (322) is touched.

5. The electronic atomization device of claim 4, wherein the touch sensing element (30) further includes a first connecting portion (33), and the first connecting portion (33) is connected between the first touch surface (311) and the third touch surface (321).

6. The electronic atomization device of claim 5, wherein the touch sensing element (30) further includes a second connecting portion (34), the second connecting portion (34) is connected between the third touch (321) surface and the fourth touch surface (322).

7. The electronic atomization device of claim 6, wherein the touch sensing element (30) further includes a third connecting portion (35), and the first connecting portion (33) and the third connecting portion (35) are connected to two opposite sides of the third touch surface (321).

8. The electronic atomization device of claim 7, wherein the touch sensing element (30) further includes a fourth connecting portion (36), the fourth connecting portion (36) is connected between the first touch surface (311) and the second touch surface (312), and the fourth connecting portion (36) and the fourth touch surface (322) are located on the same side of the housing (10).

9. The electronic atomization device of claim 4, wherein the touch sensing element (30) further includes a second connecting portion (34), the second connecting portion (34) is connected between the third touch surface (321) and the fourth touch surface (322);
wherein a height of the second connecting portion (34) along the orthographic projection direction is smaller than a height of the third touch surface (321) and smaller than a height of the fourth touch surface (322).

10. The electronic atomization device of claim 4, wherein the first touch surface (311) and the second touch surface (312) each have a plurality of touch points; and/or, the third touch surface (321) and the fourth touch surface (322) each have a plurality of touch points.

11. The electronic atomization device of claim 10, wherein the first touch sensing portion (31) generates the first capacitance signal when any touch point on the first touch surface (311) and any touch point on the second touch surface (312) are touched.

12. The electronic atomization device of claim 10, wherein the second touch sensing portion (32) generates the second capacitance signal when any touch point on the third touch surface (321) or any touch point on the fourth touch surface (322) is touched.

13. The electronic atomization device of claim 1, wherein the housing (10) includes a first shell (13) and a second shell (14), the first shell (13) is disposed inside the second shell (14), a limiting groove (15) is defined in the first shell (13) or the second shell (14), and the touch sensing element (30) is disposed in the limiting groove (15).

14. The electronic atomization device of claim 13, wherein the limiting groove (15) is defined on an outer side of the first shell (13), and an opening of the limiting groove (15) faces the second shell (14).

15. The electronic atomization device of claim 1, wherein the touch sensing element (30) further includes a third connecting portion (35), the third connecting portion (35) is connected to a side of the second touch sensing portion (32) away from the first touch sensing portion (31), and is configured to be directly electrically connected to the control module (40).

16. The electronic atomization device of claim 2, wherein the touch sensing element (30) is a flexible circuit board, the electronic atomization device further comprises a plane perpendicular to a central axis of the atomizing channel (21), and the plane has a first direction (L2) and a second direction (L3) perpendicular to the first direction (L2);
a length of a first projection of the mouthpiece portion (12) onto the plane along the first direction (L2) is greater than a length of the first projection along the second direction (L3);
a length of a second projection of the gripping portion onto the plane along the first direction (L2) is greater than a length of the second projection along the second direction (L3);
the second touch sensing portion (32) includes a third touch surface (321) and a fourth touch surface (322), the third touch surface (321) and the fourth touch surface (322) are disposed on two adjacent sides of the grip portion **(11);** the third touch surface (321) and the first touch surface (311) are located on the same side of the housing (10);
the touch sensing element (30) further includes a second connecting portion (34), the second connecting portion (34) is connected between the third touch surface (321) and the fourth touch surface (322);
along the central axis of the atomizing channel (21), a height of the second connecting portion (34) is smaller than a height of the third touch surface (321) and smaller than a height of the fourth touch surface (322).
